Europäisches Patentamt

(19) European Patent Office

Office européen des brevets

(11) Publication number: **0 253 954**
**B1**

(12) # EUROPEAN PATENT SPECIFICATION

(45) Date of publication of the patent specification: 25.07.90

(51) Int. Cl.⁵: **F16K 37/00**

(21) Application number: 87105339.3

(22) Date of filing: **10.04.87**

(54) Sensing the open and/or closed condition of valves.

(30) Priority: **17.04.86 AU 5507/86**

(43) Date of publication of application: **27.01.88 Bulletin 88/4**

(45) Publication of the grant of the patent: **25.07.90 Bulletin 90/30**

(84) Designated Contracting States: **AT BE CH DE ES FR GB GR IT LI LU NL SE**

(56) References cited:
EP-A- 0 051 961
WO-A-86/00970
DE-A- 1 566 781
DE-A- 1 956 534
DE-A- 2 146 456
DE-A- 3 331 013
DE-A- 3 344 196
FR-A- 1 586 381
US-A- 3 606 242
US-A- 3 633 615
US-A- 3 989 911
US-A- 4 093 000

(73) Proprietor: MAGEE, Anthony James, 1 Curdies Street, East Bentleigh Victoria 3204(AU)

(72) Inventor: MAGEE, Anthony James, 1 Curdies Street, East Bentleigh Victoria 3204(AU)

(74) Representative: May, Hans Ulrich, Dr., Patentanwalt Dr. H.U. May Thierschstrasse 27, D-8000 München 22(DE)

## Description

### Field of the invention

This invention relates to sensing of the open and/or closed condition of valves and relates particularly but not exclusively to sensing such conditions of fire installation water valves.

### Description of prior art

In applicant's Australian petty patent No. 549 439 (= WO 86/00970) there is disclosed sensing means for water supply valves in a fire alarm installation. The sensing means in such valves operates to sense when the valve is closed from the open position. This requirement is considered to be essential in fire alarm installations because if the main water supply valve is closed, then unless some warning can be given to alert personal serious consequences can result if there is a fire.

DE-A 2 146 456 describes an electromagnetic device for indicating the position of a valve closing element by two reed switches which however respectively sense only the fully open or fully closed position of the valve.

EP-A 51 961 describes an electromagnetic apparatus for monitoring a valve with one or several reed switches for sensing different positions of a magnetic assembly which is fixed to the axially movable valve closure element. However, the reed switches are not in close proximity to each other, and are all biassed in the same way.

A problem where such prior art sensing means is used is that often the actual sensor element can fail and thus the sensor means is unable to provide an alarm condition when the valve is moved to a non-intended position -

i.e. for example when the valve is moved from an open position towards a closed position. Also, the magnetic parts of the sensing means may be tampered with from the outside by placing foreign magnetic material in their vicinity.

### Objection of the Invention

Accordingly, it is an object of the present invention to provide sensing means where the likelihood of failure of the sensing element is minimized so that alarm condition will always be given when the valve is moved to a non-intended position.

This is achieved by placing a second sensing element immediately adjacent the former sensing element. The positioning of the sensing elements are such that when the valve is in an intended position – i.e. for example, a fully open position – the former sensing element will be under the influence of a magnetic material part carried by the valve which causes the former sensing element to assume a non-alarm condition but the second sensing element will not be under the influence of said magnetic material part of the valve which causes it to be in non-alarm condition. As soon as the valve moved from the intended position, the former sensing element will no longer be under the influence of the magnetic material part and will provide an alarm condition. Simultaneously, the second sensing element will then be under the influence of the magnetic material part and will also provide an alarm condition. Thus if the former sensing element should fail, there will be a back-up by the provision of the second sensor element.

### Statement of Invention

Therefore in accordance with a first broad aspect of the present invention there may be provided a valve for controlling the supply of fluids or other materials, and to provide an alarm condition if the valve is moved to be in a non-intended position for flow of fluids or other material therethrough, said valve having first magnetic sensing means mounted thereto for permitting said alarm to be given, said valve being characterized in that it has a second magnetic sensing means mounted thereto immediately adjacent said first magnetic sensing means so that when said valve is in its intended position said first magnetic sensing means will be under the influence of a magnetic material part of said valve and will be biased to not provide an alarm condition but as soon as the valve is moved to be in a position other than said intended position and said magnetic material part moves as a consequence said first magnetic sensing means will not be under the influence of said magnetic material part and will provide an alarm condition, and so that said second magnetic means will not be under the influence of said magnetic material part when said valve is in its intended position and an alarm condition will not be given but as soon as the valve is moved to a position other than said intended position and said magnetic material part moves as a consequence, said second magnetic sensing means will be influenced by said magnetic material part and will be biased to provide an alarm condition, said second magnetic sensing means serving as a back-up to provide an alarm condition if said first magnetic sensing means fails to provide an alarm condition when said valve is moved from its said intended position.

Most preferably said valve has further magnetic sensing means, positioned at different positions adjacent said magnetic sensing means, whereby to act with said second magnetic sensing means to sense if a person places foreign magnetic material in proximity to said first magnetic sensing means, in attempt to hold said magnetic sensing means in a non-alarm condition. In this manner one or more of the magnetic sensing means will sense the presence of such foreign magnetic material and, in use, will provide an alarm signal.

Most preferably each of said magnetic sensing means is a two state device arranged so that it is biased by said magnetic material to be in one of its states when the valve is in said first state, and so that it can assume its other state when said valve is operated to move to its second state, – i.e. said magnetic material does not bias it to said one state. It is also preferred that said first magnetic sensing means is biased to be in one of its states and wherein the states of the others of said magnetic sensing means are oppositely arranged – i.e. that said magnetic material does not bias them into one of their states until the valve is closed.

It should be appreciated that the second magnetic sensing means provides a back-up for the first magnetic sensing means, so that when the valve is moved from its first state to its second state, then if the first magnetic sensing means should not change its state under those conditions due to a failure of the first magnetic sensing means, then the second magnetic sensing means will trip to the other of its states when said magnetic material moves into proximity of the second magnetic sensing means. Accordingly, the second magnetic sensing means provides a back-up for the fail safe detection that the valve has moved from its first state towards its second state. Because the second magnetic sensing means is positioned adjacent the first magnetic sensing means, it provides a reliable indication as soon as the valve is moved from its first state towards its second state.

In accordance with a further aspect of the present invention there is provided a sensor unit for fitting to a valve to provide sensing so an alarm can be given if said valve is operated to be in a non-intended position, said sensor unit comprising first magnetic sensing means mounted in a housing adapted to be fitted to said valve, said first magnetic sensing means being held in said housing so when said housing is correctly fitted to said valve, it will be influenced by a magnetic material part carried by said valve when said valve is in an intended position and will not be in an alarm condition, but when the valve is moved to a non-intended position it will no longer be under the influence of said magnetic material part and will then be in an alarm condition, characterized in that there is a second magnetic sensing means mounted in said housing immediately adjacent said first magnetic sensing means so that when said valve is in its intended position said second magnetic sensing means will not be under the influence of said magnetic material part but when the valve is moved to be in a non-intended position it will be influenced by said magnetic material part and will provide an alarm condition, said second magnetic sensing means sewing as a back-up for said first magnetic sensing means.

## Brief Description of the Drawings

In order that the invention can be more clearly ascertained preferred embodiments will now be described with reference to the accompanying drawings, wherein:

Figure 1 is a side view of a known gate valve modified in accordance with an embodiment of the present invention;

Figure 2 is a sectional view taken along line 2-2 of Figure 1 showing the detail of a sensor unit;

Figure 3 is an end view of the sensor unit shown in Figure 2 with its lid removed;

Figure 4 is a plan view of sensor unit for a different type of valve, modified with preferred sensing means in accordance with the present invention and having its lid removed;

Figure 5 is a view similar to Figure 4 but showing the valve and with its operating handle removed;

Figure 6 is an end view of the sensor unit shown in Figures 4 and 5;

Figure 7 is a perspective view of the sensor unit shown in Figures 4, 5 and 6;

Figure 8 is a perspective view showing the sensor unit of Figures 4 through 7 but with the top removed and the handle of the valve locked in a valve open position;

Figure 9 is an underneath perspective view of the lid of the sensor unit shown in Figures 4 through 8;

Figure 10 is a perspective view of the operating handle of the valve shown in Figures 4 through 9;

Figure 11 shows a side view of the valve in the sensor unit shown in Figures 4 through 10 and fitted with the handle shown in Figure 10;

Figures 12 through 14 show respective positions of the handle for open, partly closed and fully closed conditions of the valve; and

Figure 15 is a block circuit diagram of the electrical wiring of a typical installation incorporating the valve with magnetic sensors in accordance with a preferred aspect of the present invention.

## Detailed Description of Preferred Embodiment

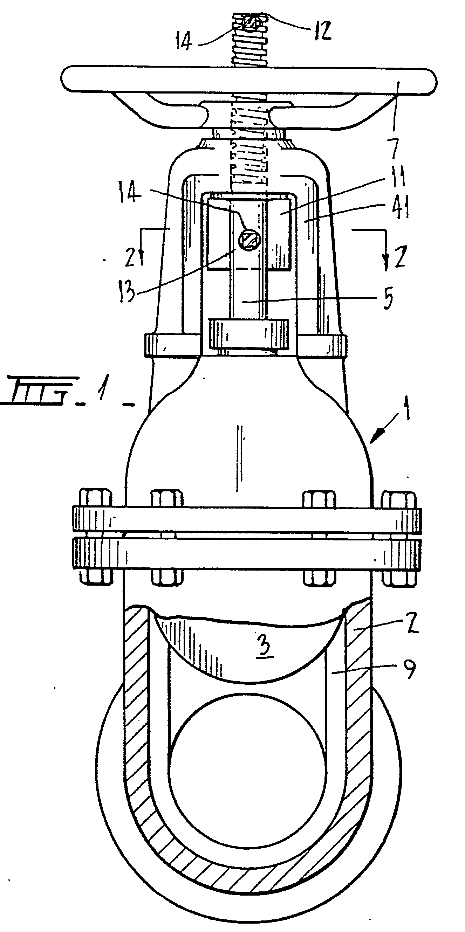

Referring now to Figure 1, there is shown a gate valve 1 which has a valve gate 3 therein. The valve gate 3 connects with a threaded valve stem 5 of brass or bronze which, in turn, is operatively connected with a threaded handle 7. Rotation of the handle 7 causes the valve stem 5 to extend or retract to thereby move the gate 3 up or down within guides 9 in the valve body 2 to open and/or close the gate valve. In this embodiment, there is provided a sensor unit 11 which comprises a number of magnetic sensing means in the form of reed switches. These have not been shown in Figure 1. The sensor unit 11 is fitted to the outside of the valve housing i.e. external of the valve chamber, but at a position where it can sense movement of the valve stem 5. This in turn, is sensing if the gate 3 is open and/or closed.

In order to effect the necessary sensing of the position of the valve stem 5, i.e. if the gate is opened and/or closed, there is provided appropriate magnetic material 12 and 13 fitted within appropriate holes 14 drilled into the valve stem 5. The sensor unit 11 can, in turn, sense the position of either appropriate magnetic material 12 or 13 and thus determine if the valve is open and/or closed. Typically, the appropriate magnetic material 12 and 13 is a permanent magnet but it may comprise ferromagnetic material such as mild steel if the reed switches are of the type which can react by the presence and/or absence of that mild steel. It should be appreciated that reed switches come in two types, i.e. one that is not magnetized and which requires a magnet to cause it to operate, and the other type wherein the reeds are magnetized or at least one of the reeds is magnetized and wherein a further magnet and/or other appropriate magnetic material such as mild steel, can influence the magnetic fields in the reed switch and cause it to operate. All of these types of switches and appropriate magnetic materials are considered to be within the scope of the present invention. Other types of magnetic sensing means are also included such as Hall effect devices and the like which when connected to appropriate circuitry can provide a two state output.

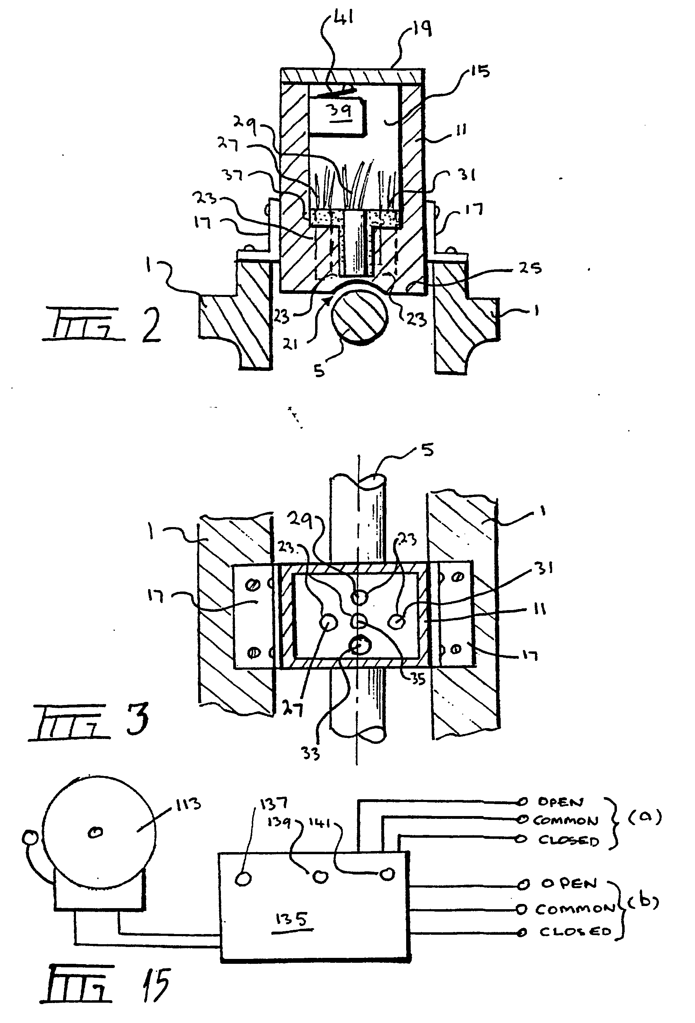

Referring now to Figure 2 there is shown a close-up sectional view of the sensor unit 11 taken along line 2-2 of Figure 1. The sensor unit 11 comprises a generally rectangular block of bronze material which has a cubic hollow interior 15. The sensor unit 11 is mounted to the valve 1 by means of right angle brackets 17 which connect with an upper yoke part of the valve 1. The sensor unit 11 has a lid 19 which closes the interior 15. The lid 19 is made from bronze material. The end of the sensor until 11 which is opposite to the lid 19 is provided with a small curved shaped depression 21. This is provided to enable the sensor unit 11 to fit in close proximity to the valve stem 5. The sensor unit 11 has five holes 23 counterbored therein. The holes 23 terminate near the forward end 25 of the sensor unit 11 and at positions where they will be in general proximity to the valve stem 5. The five holes 23 are arranged in a right angle cross configuration so that three holes 23 are in line and transverse to the longitudinal axis of the stem 5 and so that the other two of the holes 23 are in line with the longitudinal axis of the valve stem 5 and in line with the central hole 23. Reed switches 27, 29, 31, 33 and 35 are positioned in each of the respective holes 23. The reed switches are then encapsulated within the holes 23 by a back fill of epoxy resin 37.

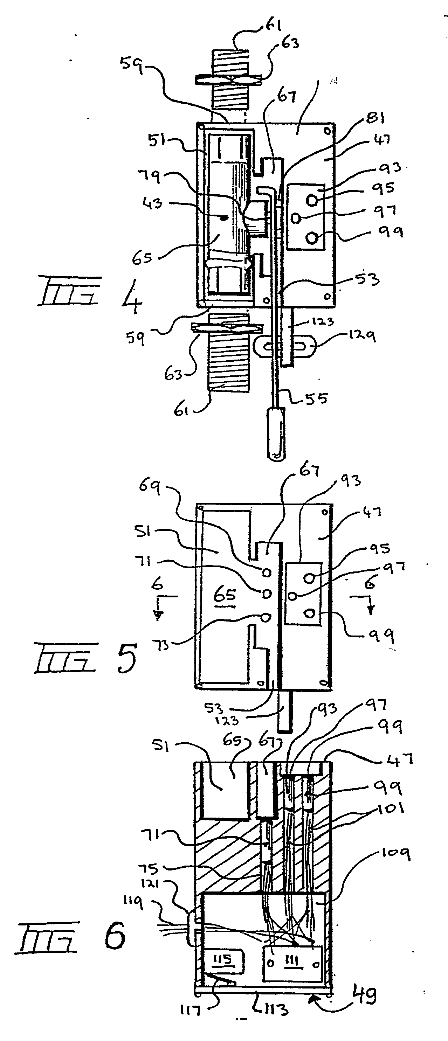

The view shown in Figure 3 depicts the positions where the respective reed switches 27, 29, 31, 33 and 35 are fitted. Each of those reed switches is of the type which has a common lead, a normally open lead and a normally closed lead. Reed switch 35 is wired so that when the magnet material 13 is directly adjacent the end thereof - i.e. the valve is open - its normally closed contacts are open. The others of the reed switches 27, 29, 31 and 33 are wired so that their normally open contacts are in parallel with the normally closed contacts of the central reed switch 35 i.e. their states are different to that of reed switch 35. In the parallel circuit arrangement of all the reed switches 27, 29, 31, 33 and 35 there will be a normally open circuit condition when the valve is in the fully open condition and the magnet material 13 is adjacent the end of the reed switch 35. If the valve is closed, i.e. the valve stem 5 is moved downwardly by rotation of the handle 7, then the magnetic material 13 will pass the lower reed switch 33 and cause it to trip to the closed condition. Approximately simultaneously, the contacts of reed switch 35 which were previously open when the valve was fully open will now close. The operation of one or other or both of the reed switches 33 and 35 will cause an alarm signal to be provided to show that the valve has moved from the fully open condition towards the closed condition.

It should be observed that the reed switch 33 in this case provides a backup for the reed switch 35 to show that the valve has moved from the fully open position to the closed position. If for example reed switch 35 fails to close due to a failure, then reed switch 33 will provide the necessary backup by the closing of its contacts when the magnetic material 13 is in proximity to the end of the reed switch 33.

All of the reed switches 27, 29, 31, 33 and 35 cooperate together so as to provide protection for the sensor unit 11 so that if a person should maliciously attempt to fool the sensor unit 11 by placing some magnetic material, either ferromagnetic material or some highly magnetic material such as a permanent magnet, near the sensor unit 11, then one or more of the reed switches 27, 29, 31, 33 and 35 will trip and cause an alarm signal to be generated even though the valve has not moved from the open position to the closed position. This, in turn, will cause an alarm signal to be generated. The magnetic material 12 is positioned on the valve stem 5 at a position where it will coincide with reed switch 29 when the valve is in the fully closed position. Thus, an output signal can be provided from the reed switch 29 if it is wired separately from the reed switches 27, 31, 33 and 35, and this can be caused to provide an indication that the valve is in the fully closed condition.

In order to enhance the tamper proof qualities of the sensor unit 11 a microswitch 39 is mounted within the interior 15 so that an arm 41 thereof engages with the undersurface of the lid 19. Typically microswitches have normally open and normally closed contacts. When the lid is in place, the switch 39 is wired so it will provide an open circuit. If the lid 19 is removed then the switch 39 will operate to close its contacts and thus provide an alarm signal. The switch 39 can be wired in parallel with reed switches 27, 31, 33 and 35.

The exact wiring of the reed switches 27, 29, 31, 33 and 35, is a matter of choice depending on the nature of the control circuit to which they are subsequently connected. For example, some control circuits work in a normally closed mode where there is no alarm given and when the switches open an alarm is provided. Accordingly, the reed switches can be appropriately wired to their respective normally opened/normally closed contacts to provide for the required end results. If required individual ones of the reed switches 27, 29, 31, 33 and 35 can be connected to respective circuits so that identification of which particular reed switch has operated can be given. All of these variations are included within the scope of the present invention. In addition, the sensor unit 11 may be fitted into any one of the embodiments disclosed in the aforementioned Petty Patent No. 549,439 and still be within the scope of the present invention.

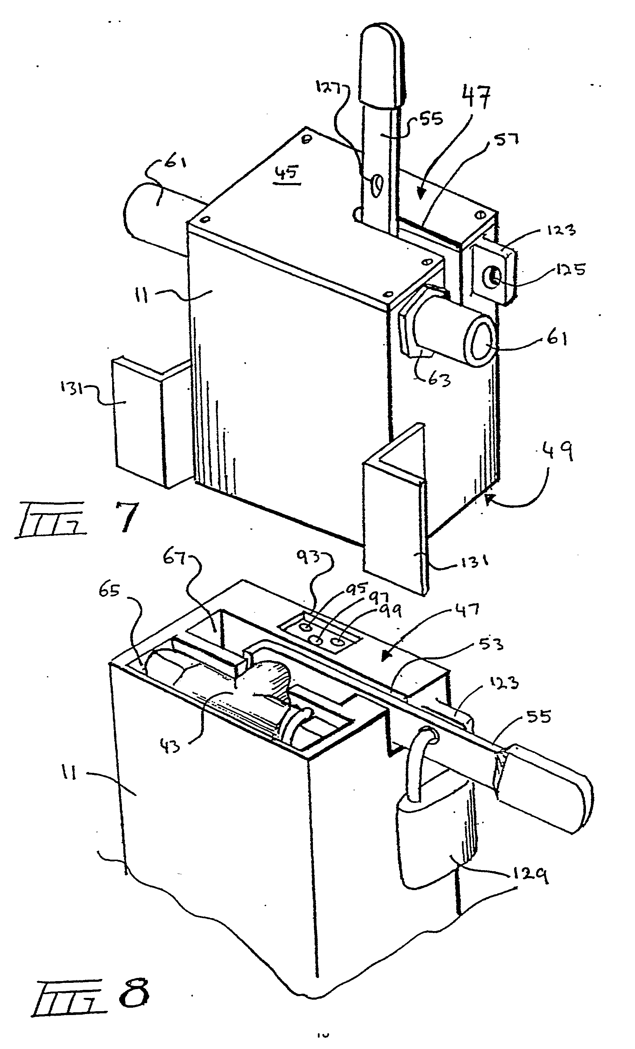

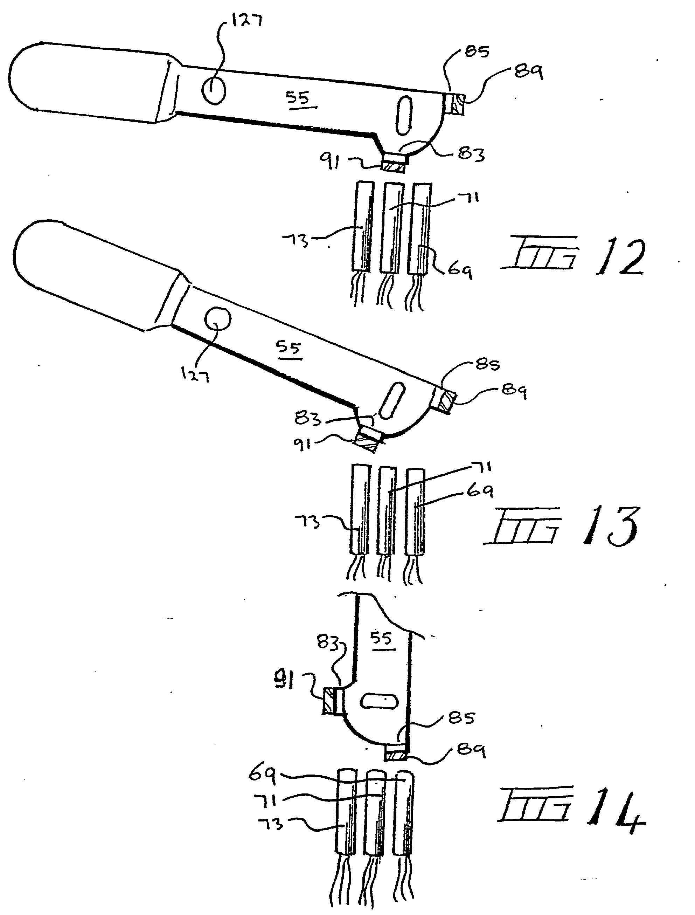

Referring now to Figures 4 through 14 there is shown a different type of valve with sensor unit 11 attached thereto. In this embodiment the valve 43 is a globe valve and is used to supply individual water supply lines in, for example, a fire alarm installation to particular ones of fire sprinklers. Hitherto, valves of this type are normally locked in the open position. Such valves have not previously been provided with magnetic sensors which can tell when the valve is closed.

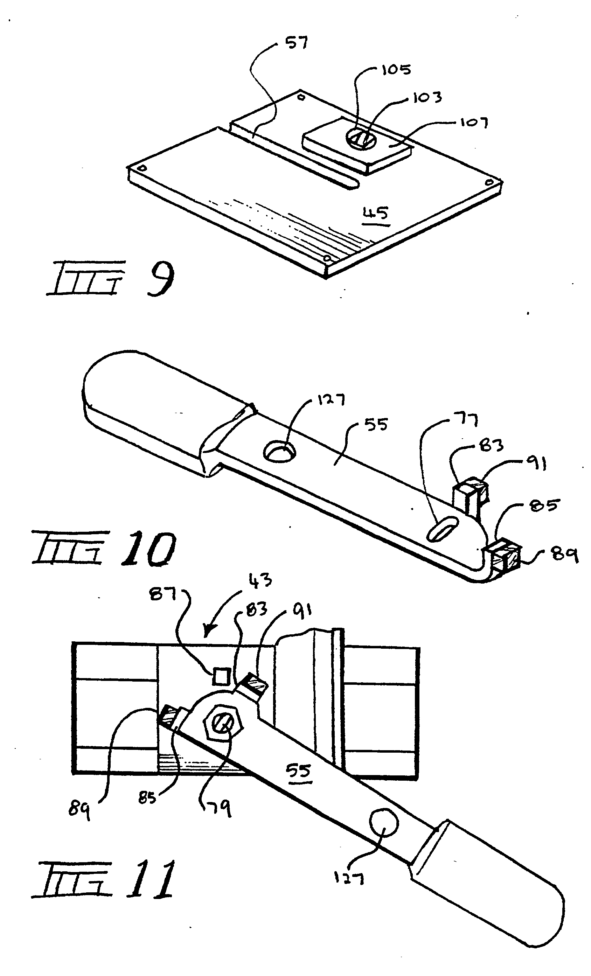

Referring firstly to Figure 4 there is shown the sensor unit 11 with a lid 45 (see Figures 7 and 9) removed therefrom. The sensor unit 11 comprises a body of bronze material of generally rectangular configuration. The body has a front end 47 and a rear end 49. The front end 47 has a cavity 51 therein in which the valve 43 is placed. The cavity 51 is of generally T shaped section in plan view as shown in Figure 5 and it has a passageway 53 extending therefrom and through which a handle 55 of the valve 43 can swing. The lid 45 also has a slot 57 therein, through which the handle 55 can swing. The cavity 51 is of sufficient dimensions to enable the valve 43 to nearly fit therein just underneath the lid 45. Circular openings 59 (not clearly shown) are provided in the sides of the sensor unit 11 and enable threaded pipe couplings 61 to be screwed into the female ends of the valve 43. Respective lock nuts 63 are provided on each of the pipe couplings 61 and when screwed up against the sensor unit 11, positively hold the valve 43 and the pipe couplings 61 locked as an integral assembly with the sensor unit 11. Cavity 51 can be considered as two parts - the first part 65 being the head of the T, and the second part 67 being the trunk of the T. The body of the valve is received in the first part 65 and the spindle 79 (not clearly shown) is received in the second part 67.

Three magnetic sensing means in the form of reed switches 69, 71 and 73 are fitted within bores 75 which are disposed in line and directly underneath the path of swinging of the handle 55. The reed switches are held in position within the bores 75 by means an epoxy backfill (not shown). By referring to Figures 10 through 14, it can be seen that the handle 55 is provided with an elongate slot 77 at its forward end which enables it to key onto the spindle 79 of the moving part of the valve 43. A suitable locking nut 81 holds the handle 55 secured to the spindle 79.

The handle 55 has two bent lugs 83 and 85 at the forward end. These lugs are used to cooperate with a stop 87 moulded integral with the external surface of the body of the valve 43 to provide for positive stopping of the handle 55 at the fully opened and or fully closed positions. Each of the lugs 83 and 85 has suitable magnetic material in the form of respective permanent magnets 89 and 91 fastened thereto on the radially, outermost surfaces thereof.

When the valve is assembled within the sensor unit 11, the magnets 91 and 89 position themselves relative to the reed switches 69, 71 and 73 as shown in Figures 12 through 14. Thus, in the valve fully open position, permanent magnet 91 is directly above the central reed switch 71, as shown in Figure 12. The other magnet 89 is situated remotely from the reed switches 69, 71 and 73 and does not influence operation of any one of those reed switches. In the position shown in Figure 12, reed switch 71 is biased by the magnet 91 to be in a normally open condition. Reed switches 69 and 73 are interconnected in parallel with reed switch 71 so that the normally open contacts are connected with the normally closed contacts of the reed switch 71. Thus, in the position shown in Figure 12 all the reed switches will have an open circuit in the valve open position.

Magnet 91 will not influence reed switches 73 or 69 in this position.

As the valve is closed magnet 91 leaves the proximity of reed switch 71 and approaches the proximity of reed switch 73. Thus, in this condition, reed switch 71 then automatically closes and provides an alarm that the valve is being closed. Simultaneously or approximately so, reed switch 73 trips to the closed position because of the proximity of the magnet 91 thereto, and this also provides for an alarm signal to be given. In this condition, reed switch 73 provides a backup or fail safe procedure for reed switch 71 in the event that it does not close and provide an alarm signal.

When the valve is fully closed as shown in Figure 14, magnet 89 is in close proximity to reed switch 69 and causes reed switch 69 to close, thereby giving an indication that the valve is fully closed. Accordingly, by wiring of reed switches 71 and 73 in parallel but in opposite states, an appropriate alarm can be given when the valve is moved from the open position to the closed position. By independently wiring reed switch 69 to a separate circuit within the fire installation, a signal can be given that the valve is in the fully closed position. It is observed that each of the reed switches 69, 71 and 73 has three leads therefrom, being respectively, the common lead, the normally open and the normally closed lead. Certain fire installations have control circuitry which causes an alarm signal to be given when a circuit is open. Accordingly, appropriate connection of the states of reed switches 69, 71 and 73 can be made to provide an alarm in these circumstances.

Referring now to Figures 4 through 9, it can be seen that there is a further cavity 93 at the front end 47 of the sensor unit 11. This further cavity 93 is a shallow depression in the body of the sensor unit 11 and this further cavity 93 has three reed switches 95, 97 and 99 therein. These reed switches are arranged in a triangular pattern as shown. These reed switches are provided in suitable bores 101 (see Figure 6) and held in place by a backfill of epoxy resin (not shown). Reed switch 97 is arranged to cooperate with appropriate magnetic material comprising a permanent magnet 103 fitted within a hole 105 provided in an upstanding platform 107 formed on the undersurface of the lid 45. Thus, when the lid 45 is closed, the platform 107 is received within the further cavity 93 and the magnet 103 cooperates with the reed switch 97. In this condition the reed switch 97 is held so that its contacts are open when the lid is in situ. If the lid 45 should be removed the reed switch 47 will trip to the closed condition and an alarm can be given. The other reed switches 95 and 99 are connected in the normally open condition and in parallel with the wiring of reed switch 97. Thus, if a person should attempt to fool the reed switch 97, by placing a magnet or other appropriate magnetic material in proximity thereto, in an attempt to open the lid 45 without causing an alarm to be given, then one or other of the various reed switches 95, 97 and 99 will trip and provide an alarm signal. It is also possible in this condition that one or others of the reed switches 69, 71 and 73 will also trip and provide an alarm condition. The reed switches 95, 97 and 99 can be connected in parallel with the reed switches 71 and 73 if desired.

It should be appreciated here, that a series connection of the reed switches in any embodiment could also be provided if required. The exact wiring configuration of the reed switches is basically immaterial so long as the reed switches 71 and 97 of this embodiment, are connected in one of their states when the magnets which cooperate therewith are in proximity and that the other reed switches are connected in the opposite of their states so that appropriate protection can be provided. The same is true of reed switches 35 and 27, 31 and 33 of the previous embodiment.

The rear end 49 of the sensor unit 11 has a rectangular shaped recess 109 therein. The leads from each of the reed switches can be appropriately wired and terminated therein at the terminal block 111. It should be noted that the recess 109 is closed by a lid 113 and that a microswitch 115 is fitted within the recess 109 so that the arm 117 thereof engages with the lid 113 and is caused to be biased into one of its operative states. Upon removal of the lid 113, the arm 117 can swing and cause the microswitch 115 to trip to the other of its states and thereby provide an alarm signal. The microswitch 115 is appropriately wired into the terminal block 111. Connecting leads 119 pass through a grommet 121 in a side wall of the recess and connect with the terminal block 111.

In order that the valve 43 can be locked in the fully open position, the body of the sensor unit 11 contains a lug 123 with a hole 125 therethrough. The handle 55, in turn, has a further hole 127 therein and a suitable padlock 129 can pass through holes 125 and 127. In order that the sensor unit 11 can be appropriately mounted to a wall or the like, suitable mounting brackets 131 are provided at the rear end 49 (see Figure 7).

It should be appreciated that two types of lid removal alarm systems have shown in this embodiment. One alarm system comprises the reed switches 95, 97 and 99 and the other comprises the microswitch 115. Either form or both is suitable or mixtures thereof as disclosed. Accordingly the embodiment shown is not to be considered as requiring opposite types of lid removal alarm sensing means.

It should be appreciated that the reed switches 69 and 73 will act to inhibit against persons placing magnetic material against the body of the sensor unit 11 in an attempt to fool reed switch 71 as either of those reed switches 69 or 73 and/or reed switch 71 can trip by the influence of such magnetic fields to provide an alarm.

Referring now to Figure 15 there is shown a block circuit of a typical fire alarm installation comprising an alarm 113 in the form of a bell, a control circuit 135 and lamp alarm means 137, 139 and 141. The control circuit 135 typically has two sets of common and open and closed connections. These are designated A and B respectively. Reed switches 69 and 29 are connected to set A whilst the remaining reed switches and microswitches are connected to set B. In this condition lamp alarm means 137 can show that the valve or valves as the case may be, are open. Lamp alarm means 139 can show that the valves have commenced closing. Simultaneously with illumination of lamp 139 the alarm bell 113 can be activated. When the valve reaches the fully closed position lamp alarm means 141 can be activated. The alarm 113 can continue to be activated in this condition.

Many modifications may be made to the invention as would be apparent to persons skilled in the alarm protection arts. For example any of the modifications previously discussed could be incorporated. Further it is envisaged that by appropriate wiring to a suitable control circuit 135 displays can be provided as to individual valves in a fire installation. It should also be appreciated that land lines or other connections can be made to a local fire authority from the control circuit 135 to give an alarm condition at the fire authority.

## Claims

1. A valve (1) for controlling the supply of fluids or other materials, and to provide an alarm condition if the valve (1) is moved to be in a non-intended position for flow of fluids or other material therethrough, said valve (1) having first magnetic sensing means (35, 71) mounted thereto for permitting said alarm to be given, said valve being characterized in that it has a second magnetic sensing means (33, 73) mounted thereto immediately adjacent said first magnetic sensing means (35, 71) so that when said valve (1) is in its intended position said first magnetic sensing means (35, 71) will be under the influence of a magnetic material part (12, 13, 91) of said valve and will be biased to not provide an alarm condition but as soon as the valve (1) is moved to be in a position other than said intended position and said magnetic material part (12, 13, 91) moves as a consequence said first magnetic sensing means (35, 71) will not be under the influence of said magnetic material part (12, 13, 91) and will provide an alarm condition, and so that said second magnetic means (33, 73) will not be under the influence of said magnetic material part (12, 13, 91) when said valve (1) is in its intended position and an alarm condition will not be given but as soon as the valve (1) is moved to a position other than said intended position and said magnetic material part (12, 13, 91) moves as a consequence, said second magnetic sensing means (33, 73) will be influenced by said magnetic material part (12, 13, 91) and will be biased to provide an alarm condition, said second magnetic sensing means (33, 73) sewing as a back-up to provide an alarm condition if said first magnetic sensing means (35, 71) fails to provide an alarm condition when said valve (1) is moved from its said intended position.

2. A valve (1) as claimed in claim 1 further characterized in that said valve (1) has further magnetic sensing means (27, 29, 31), positioned adjacent said first magnetic sensing means (35), whereby to act with said second magnetic sensing means (33) to sense foreign magnetic material in proximity to said first magnetic sensing means (35), placed there by a person in attempt to hold said second magnetic sensing means (33) in a non-alarm condition, whereby, in use, an alarm condition can be given by said further magnetic sensing means (27, 29, 31).

3. A valve (1) as claimed in any one of the preceding claims further characterized in that said first magnetic sensing means (35, 71) and said second magnetic sensing means (33, 73) are mounted in a housing (11) which is attached to said valve (1) so that the first and second magnetic sensing means (33, 73) operatively co-operate with said magnetic material part (12, 13, 91) which is carried by a valve stem (5) of said valve and wherein said housing (11) is hollow, said first and second magnetic sensing means (35, 33, 71, 73) being electrical switches and wherein electrical connection for the switches is provided within said housing (11) and wherein said housing (11) is closed by a lid (19, 45), there being lid removal (39, 95, 97, 99) alarm means within said housing (11) which, in use, can be used to provide an alarm signal if said lid (19, 45) is removed.

4. A valve (1) as claimed in claim 3, further characterized in that said lid removal alarm means (39, 95, 97, 99) comprises magnetic lid removal sensing means (95, 97, 99) which will co-operate with magnetic material (103) carried by said lid, when said lid is closed.

5. A valve as claimed in claim 4, further characterized in that said lid removal alarm means (39, 95, 97, 99) has additional magnetic sensing means (95, 99) mounted adjacent said lid removal magnetic sensing means (97), said additional magnetic sensing means (95, 99) being in a non-alarm state when said lid is closed but positioned relative to magnetic material (103) carried by said lid so that if foreign magnetic material is brought into proximity of said lid in an attempt to fool said lid removal magnetic sensing means (97), if said lid is to be removed, then said additional magnetic sensing means (95, 99) will be caused to assume an alarm state.

6. A valve as claimed in any one of the preceding claims, further characterized in that there is provided an additional magnetic sensing means (69) for sensing an additional magnetic part (89) of the valve which moves, whereby to give an indication that said valve has fully reached a position other than said intended position.

7. A sensor unit (11) for fitting to a valve (1) so as to provide a valve with the functions of the valve (1) of claim 1 to provide sensing so that an alarm can be given if said valve is operated to be in a non-intended position, said sensor unit comprising first magnetic sensing means (35, 71) mounted in a housing (11) adapted to be fitted to said valve, said first magnetic sensing means (35, 71) being held in said housing (11) so when said housing (11) is correctly fitted to said valve, it will be influenced by a magnetic material part (12, 13, 91) carried by said valve when said valve is in an intended position and will not be in an alarm condition, but when the valve is moved to a non-intended position it will no longer be under the influence of said magnetic material part (12, 13, 91) and will then be in an alarm condition, characterized in that there is a second magnetic sensing means (33, 73) mounted in said housing (11) immediately adjacent said first magnetic sensing means (35, 71) so that when said valve is in its intended position said second magnetic sensing means (33, 73) will not be under the influence of said magnetic material part (12, 13, 91) but when the valve is moved to be in a non-intended position it will be influenced by said magnetic material part (12, 13, 91) and will provide an alarm condition, said second magnetic sensing means (33, 73) serving as a back-up for said first magnetic sensing means (35, 71).

8. A first magnetic sensing means and a second magnetic sensing means as claimed in claim 7, including further magnetic sensing means (27, 29, 31) held adjacent said first magnetic sensing means (35, 71), whereby to act with said second magnetic sensing means (33, 73) to sense foreign magnetic material in proximity to said first magnetic sensing means (35, 71), placed there by a person in an attempt to hold said second magnetic sensing means (33, 73) in a non-alarm condition, whereby, in use, an alarm can be given.

**Revendications**

1. Vanne (1) pour la commande de la distribution de fluides ou autres substances et pour l'émission d'un signal d'alarme si la vanne (1) est déplacée à une position incorrecte pour le passage des fluides ou autres substances dans la vanne, ladite vanne (1) comportant un premier organe de détection magnétique (35, 71) monté sur la vanne pour permettre l'émission de ladite alarme, ladite vanne étant caractérisée en ce qu'elle comporte un deuxième organe de détection magnétique (33, 73) monté sur la vanne et immédiatement adjacent au dit premier organe de détection magnétique (35, 71) de sorte que, lorsque ladite vanne (1) est dans sa position correcte, ledit premier organe de détection magnétique (35, 71) est sous l'influence d'une partie en matière magnétique (12, 13, 91) de ladite vanne et il est sollicité de manière à ne pas fournir un signal d'alarme mais, dès que la vanne (1) est déplacée à une position autre que ladite position correcte et ladite partie en matière magnétique (12, 13, 91) est déplacée de façon correspondante, ledit premier organe de détection magnétique (35, 71) n'est pas sous l'influence de ladite partie en matière magnétique (12, 13, 91) et il fournit un signal d'alarme, et de sorte que ledit deuxième organe magnétique (33, 73) n'est pas sous l'influence de ladite partie en matière magnétique (12, 13, 91) lorsque ladite vanne (1) est dans sa position correcte et il n'y a pas d'état d'alarme mais, dès que la vanne (1) est déplacée à une position autre que ladite position correcte et ladite partie en matière magnétique (12, 13, 91) est déplacée de façon correspondante, ledit deuxième organe de détection magnétique (33, 73) est influencé par ladite partie en matière magnétique (12, 13, 91) et il est sollicité de manière à définir un état d'alarme, ledit deuxième organe de détection magnétique (33, 73) servant de secours pour établir un état d'alarme si ledit premier organe de détection magnétique (35, 71) est défaillant dans l'établissement d'un état d'alarme lorsque ladite vanne (1) est déplacée à partir de sa dite position correcte.

2. Vanne (1) suivant la revendication 1, caractérisée en outre en ce que ladite vanne (1) comporte d'autres organes de détection magnétique (27, 29, 31) adjacents au premier organe de détection magnétique (35), de façon à coopérer avec ledit deuxième organe de détection magnétique pour détecter un corps magnétique étranger placé à proximité dudit premier organe magnétique (35) par une personne essayant de maintenir ledit deuxième organe de détection magnétique (33) dans un état de non alarme, de sorte que, en utilisation, un état d'alarme peut être établi par lesdits autres organe de détection magnétique (27, 29, 31).

3. Vanne (1) suivant l'une quelconque des revendications précédentes, caractérisée en outre en ce que ledit premier organe de détection magnétique (35, 71) et ledit deuxième organe de détection magnétique (33, 73) sont montés dans un boîtier (11) qui est fixé à ladite vanne (1) de sorte que le premier et le deuxième organes de détection magnétique (33, 73) coopèrent fonctionnellement avec ladite partie en matière magnétique (12, 13, 91) qui est portée par une tige de vanne (5) de ladite vanne, et dans laquelle ledit boîtier (11) est creux, lesdits premier et deuxième organes de détection magnétique (35, 33, 71, 73) étant des contacts électriques, et dans laquelle le raccordement électrique des contacts est prévu à l'intérieur dudit boîtier (11), et dans laquelle ledit boîtier (11) est fermé par un couvercle (19, 45), des moyens d'alarme (39, 95, 97, 99) en cas d'enlèvement du couvercle étant prévus à l'intérieur dudit boîtier (11) et pouvant servir, en utilisation, pour fournir un signal d'alarme si on enlève ledit couvercle (19, 45).

4. Vanne (1) suivant la revendication 3, caractérisée en outre en ce que lesdits moyens d'alarme d'enlèvement de couvercle (39, 95, 97, 99) comprennent des organes de détection magnétique d'enlèvement de couvercle (95, 97, 99) qui coopèrent avec une matière magnétique (103) portée par ledit couvercle lorsque ledit couvercle est fermé.

5. Vanne suivant la revendication 4, caractérisée en outre en ce que lesdits moyens d'alarme d'enlèvement de couvercle (39, 95, 97, 99) comprennent des organes de détection magnétique supplémentaires (95, 99) montés près dudit organe de détection magnétique d'enlèvement de couvercle (97), lesdits organes de détection magnétique supplémentaires (95, 99) étant dans un état de non alarme lorsque ledit couvercle est fermé, mais situés par rapport à la matière magnétique (103) portée par ledit couvercle de sorte que, si on approche un corps magnétique étranger dudit couvercle dans une tentative de fraude dudit organe de détection magnétique d'enlèvement de couvercle (97), si on veut enlever ledit couvercle, alors lesdits organes de détection magnétique supplémentaires (95, 99) prennent un état d'alarme.

6. Vanne suivant l'une quelconque des revendications précédentes, caractérisée en outre en ce qu'il est prévu un organe de détection magnétique supplémentaire (69) pour détecter une partie magnétique supplémentaire (89) de la vanne qui se déplace de manière à fournir une indication que ladite vanne a atteint complètement une position autre que ladite position correcte.

7. Ensemble de détection (11) pour montage sur une vanne (1) de façon à donner à une vanne les fonctions de la vanne (1) suivant la revendication 1 afin de permettre une détection de sorte qu'une alarme peut être déclenchée si on manoeuvre ladite vanne pour l'amener dans une position incorrecte, ledit ensemble de détection comprenant un premier organe de détection magnétique (35, 71) monté dans un boîtier (11) qui peut être fixé à ladite vanne, ledit premier organe de détection magnétique (35, 71) étant tenu dans ledit boîtier (11) de sorte que, lorsque ledit boîtier (11) est correctement monté sur ladite vanne, il est influencé par une partie en matière magnétique (12, 13, 91) portée par ladite vanne lorsque ladite vanne est dans une position correcte et il n'est pas dans un état d'alarme, mais, lorsque la vanne est déplacée à une position incorrecte, il n'est plus sous 1, influence de ladite partie en matière magnétique (12, 13, 91) et il est alors dans un état d'alarme, caractérisé en ce qu'il est prévu un deuxième organe de détection magnétique (33, 73) monté dans ledit boîtier (11) et immédiatement adjacent audit premier organe de détection magnétique (35, 71) de sorte que, lorsque ladite vanne est dans sa position correcte, ledit deuxième organe de détection magnétique (33, 73) n'est pas sous l'influence de ladite partie en matière magnétique (12, 13, 91) mais, lorsque la vanne est amenée à une position incorrecte, il est influencé par ladite partie en matière magnétique (12, 13, 91) et il établit un état d'alarme, ledit deuxième organe de détection magnétique (33, 73) servant de secours pour ledit premier organe de détection magnétique (35, 71).

8. Premier organe de détection magnétique et deuxième organe de détection magnétique suivant la revendication 7, comprenant d'autres organes de détection magnétique (27, 29, 31) tenus près dudit premier organe de détection magnétique (35, 71), de manière à agir avec ledit deuxième organe de détection magnétique (33, 73) pour détecter un corps magnétique étranger à proximité dudit premier organe de détection magnétique (35, 71), ce corps étranger étant placé à cet endroit par une personne essayant de maintenir ledit deuxième organe de détection magnétique (33, 73) dans un état de non alarme, de sorte que, en utilisation, une alarme peut être déclenchée.

**Patentansprüche**

1. Ventil (1) zur Regelung der Zuführung von Fluiden oder anderen Stoffen und zur Erzeugung eines Alarmzustands, wenn das Ventil (1) in eine nichtgewünschte Stellung zum Durchfluß von Fluiden oder anderem Material bewegt wird, wobei das Ventil (1) eine erste daran angeordnete Magnetsensoreinrichtung (35, 71) hat, die die Auslösung des Alarms erlaubt, wobei das Ventil dadurch gekennzeichnet ist, daß es eine zweite daran angeordnete Magnetsensoreinrichtung (33, 73) unmittelbar benachbart der ersten Magnetsensoreinrichtung (35, 71) aufweist, so daß, wenn das Ventil (1) seine gewünschte Stellung einnimmt, die erste Magnetsensoreinrichtung (35, 71) von einem Magnetmaterialteil (12, 13, 91) des Ventils beeinflußt und so vorgespannt ist, daß sie keinen Alarmzustand liefert, sie aber, sobald das Ventil (1) in eine andere als die gewünschte Stellung bewegt wird und das Magnetmaterialteil (12, 13, 91) infolgedessen die erste Magnetsensoreinrichtung (35, 71) bewegt, nicht von dem Magnetmaterialteil (12, 13, 91) beeinflußt ist und einen Alarmzustand liefert, und so, daß die zweite Magnetsensoreinrichtung (33, 73) von dem Magnetmaterialteil (12, 13, 91) nicht beeinflußt ist, wenn sich das Ventil (1) in seiner gewünschten Stellung befindet, und ein Alarmzustand nicht ausgelöst wird, aber, sobald das Ventil (1) in eine andere als die gewünschte Stellung bewegt und das Magnetmaterialteil (12, 13, 91) infolgedessen bewegt wird, die zweite Magnetsensoreinrichtung (33, 73) von dem Magnetmaterialteil (12, 13, 91) beeinflußt und vorgespannt wird, um einen Alarmzustand zu liefern, wobei die zweite Magnetsensoreinrichtung (33, 73) als Reserveeinrichtung dient und einen Alarmzustand liefert, wenn die erste Magnetsensoreinrichtung (35, 71) keinen Alarmzustand liefert, wenn das Ventil (1) aus seiner gewünschten Lage bewegt wird.

2. Ventil (1) nach Anspruch 1, dadurch gekennzeichnet, daß das Ventil (1) eine weitere Magnetsensoreinrichtung (27, 29, 31) hat, die der ersten Magnetsensoreinrichtung (35) benachbart ist, so daß sie gemeinsam mit der zweiten Magnetsensoreinrichtung (33) ein fremdes Magnetmaterial in der Nähe der ersten Magnetsensoreinrichtung (35), das dort von einer Person bei dem Versuch, die zweite Magnetsensoreinrichtung (33) in einem Nicht-Alarmzustand zu halten, angeordnet wird, erfaßt, so daß im Gebrauch ein Alarmzustand von der weiteren Magnetsensoreinrichtung (27, 29, 31) erzeugt wird.

3. Ventil (1) nach einem der vorhergehenden Ansprüche, dadurch gekennzeichnet, daß die erste Magnetsensoreinrichtung (35, 71) und die zweite Magnetsensoreinrichtung (33, 73) in einem Gehäuse (11) angeordnet sind, das so an dem Ventil (1) befestigt ist, daß die erste und die zweite Magnetsensoreinrichtung (33, 73) betriebsmäßig mit dem Magnetmaterialteil (12, 13, 91) zusammenwirken, das sich an einer Ventilspindel (5) des Ventils befindet, wobei das Gehäuse (11) hohl ist, die erste und die zweite Magnetsensoreinrichtung (35, 33, 71, 73) elektrische Schalter sind und der elektrische Anschluß für die Schalter im Inneren des Gehäuses (11) vorgesehen ist und das Gehäuse (11) mit einem Deckel (19, 45) verschlossen ist, wobei im Gehäuse (11) eine Deckelabnahme-Alarmeinrichtung (39, 95, 97, 99) vorgesehen ist, die im Gebrauch dazu dient, ein Alarmsignal zu liefern, wenn der Deckel (19, 45) abgenommen wird.

4. Ventil (1) nach Anspruch 3, dadurch gekennzeichnet, daß die Deckelabnahme-Alarmeinrichtung (39, 95, 97, 99) eine Deckelabnahme-Magnetsensoreinrichtung (95, 97, 99) umfaßt, die mit an dem Deckel befindlichem Magnetmaterial (103) zusammenwirkt, wenn der Deckel geschlossen ist.

5. Ventil nach Anspruch 4, dadurch gekennzeichnet, daß die Deckelabnahme-Alarmeinrichtung (39, 97, 97, 99) eine zusätzliche Magnetsensoreinrichtung (95, 99) aufweist, die angrenzend an die Deckelabnahme-Magnetsensoreinrichtung (97) angeordnet ist und sich in einem Nicht-Alarmzustand befindet, wenn der Deckel geschlossen ist, aber relativ zu an dem Deckel befindlichem Magnetmaterial (103) so positioniert ist, daß, wenn bei einem Versuch der Überlistung der Deckelabnahme-Magnetsensoreinrichtung (97) zwecks Abnahme des Deckels fremdes Magnetmaterial in die Nähe des Deckels gebracht wird, die zusätzliche Magnetsensoreinrichtung (95, 99) in einen Alarmzustand gebracht wird.

6. Ventil nach einem der vorhergehenden Ansprüche, dadurch gekennzeichnet, daß eine zusätzliche Magnetsensoreinrichtung (69) vorgesehen ist, die einen sich bewegenden zusätzlichen Magnetteil (89) des Ventils erfaßt und dadurch anzeigt, daß das Ventil eine andere als die gewünschte Stellung vollständig erreicht hat.

7. Sensoreinheit (11) zur Montage an einem Ventil (1), um ein Ventil mit den Funktionen des Ventils (1) nach Anspruch 1 zu versehen und eine Erfassung zu ermöglichen, so daß, wenn das Ventil in eine nichtgewünschte Stellung betätigt wird, ein Alarm ausgelöst werden kann, wobei die Sensoreinheit eine erste Magnetsensoreinrichtung (35, 71) aufweist, die in einem am Ventil anbringbaren Gehäuse (11) untergebracht ist, wobei die erste Magnetsensoreinrichtung (35, 71) so in dem Gehäuse (11) gehalten ist, daß sie, wenn das Gehäuse (11) richtig an dem Ventil montiert ist, von einem am Ventil angebrachten Magnetmaterialteil (12, 13, 91) beeinflußt wird, wenn sich das Ventil in einer gewünschten Stellung befindet, und keinen Alarmzustand einnimmt, die jedoch, wenn das Ventil in eine nichtgewünschte Stellung bewegt wird, nicht mehr von dem Magnetmaterialteil (12, 13, 91) beeinflußt wird und sich dann in einem Alarmzustand befindet, dadurch gekennzeichnet, daß in dem Gehäuse (11) unmittelbar benachbart der ersten Magnetsensoreinrichtung (35, 71) eine zweite Magnetsensoreinrichtung (33, 73) angeordnet ist, so daß, wenn das Ventil seine gewünschte Stellung einnimmt, die zweite Magnetsensoreinrichtung (33, 73) nicht unter dem Einfluß des Magnetmaterialteils (12, 12, 91) steht, jedoch, wenn das Ventil in eine nichtgewünschte Stellung bewegt wird, von dem Magnetmaterialteil (12, 13, 91) beeinflußt wird und einen Alarmzustand liefert, wobei die zweite Magnetsensoreinrichtung (33, 73) als Reserve für die erste Magnetsensoreinrichtung (35, 71) dient.

8. Erste Magnetsensoreinrichtung und zweite Magnetsensoreinrichtung nach Anspruch 7, umfassend eine weitere Magnetsensoreinrichtung (27, 29, 31), die der ersten Magnetsensoreinrichtung (35, 71) benachbart gehalten ist, so daß sie mit der zweiten Magnetsensoreinrichtung (33, 73) zusammenwirkt zur Erfassung von fremdem Magnetmaterial im Bereich der ersten Magnetsensoreinrichtung (35, 71), das von einer Person bei dem Versuch, die zweite Magnetsensoreinrichtung (33, 73) in einem Nicht-Alarmzustand zu halten, dort angeordnet wird, so daß im Gebrauch ein Alarm ausgelöst werden kann.

FIG. 1

EP 0 253 954 B1

FIG 2

FIG 3

FIG 15

FIG 4

FIG 5

FIG 6

FIG 7

FIG 8

FIG 9

FIG 10

FIG 11

FIG 12

FIG 13

FIG 14